(19)

Europäisches
Patentamt
European
Patent Office
Office européen
des brevets

(11) **EP 4 230 993 B1**

(12) **EUROPEAN PATENT SPECIFICATION**

(45) Date of publication and mention
of the grant of the patent:
**16.07.2025 Bulletin 2025/29**

(21) Application number: **21892121.1**

(22) Date of filing: **23.09.2021**

(51) International Patent Classification (IPC):
**G01N 15/0205** (2024.01)     **G01N 15/00** (2024.01)
**G01S 7/48** (2006.01)     **G01S 17/42** (2006.01)
**G01N 15/06** (2024.01)     **G01S 17/95** (2006.01)

(52) Cooperative Patent Classification (CPC):
**G01S 17/95; G01N 15/0205; G01N 15/06;**
**G01S 7/4802; G01S 17/42;** G01N 15/075;
G01N 2015/0026; G01N 2015/0046; Y02A 90/10

(86) International application number:
**PCT/KR2021/012968**

(87) International publication number:
**WO 2022/102951 (19.05.2022 Gazette 2022/20)**

(54) **METHOD FOR READING FINE DUST BY USING LIDAR**

VERFAHREN ZUM LESEN VON FEINSTAUB MITTELS LIDAR

PROCÉDÉ DE MESURE DE POUSSIÈRE FINE À L'AIDE D'UN LIDAR

(84) Designated Contracting States:
**AL AT BE BG CH CY CZ DE DK EE ES FI FR GB**
**GR HR HU IE IS IT LI LT LU LV MC MK MT NL NO**
**PL PT RO RS SE SI SK SM TR**

(30) Priority: **12.11.2020 KR 20200151066**

(43) Date of publication of application:
**23.08.2023 Bulletin 2023/34**

(73) Proprietors:
• **Pukyong National University Industry -**
**University Cooperation Foundation**
**Busan 48513 (KR)**
• **Aict**
**Suwon-si, Gyeonggi-do 16229 (KR)**

(72) Inventors:
• **NOH, Young Min**
**Busan 48513 (KR)**
• **KIM, Kwan Chul**
**Suwon-si Gyeonggi-do 16229 (KR)**

(74) Representative: **Stolmár & Partner**
**Patentanwälte PartG mbB**
**Blumenstraße 17**
**80331 München (DE)**

(56) References cited:
KR-A- 20150 069 189     KR-B1- 101 156 660
KR-B1- 101 609 740     KR-B1- 102 139 815

• MAO JIANDONG ET AL: "Particle Size
Distributions Based on a Multipopulation
Genetic Algorithm Used in Multiwavelength
Lidar", JOURNAL OF RUSSIAN LASER
RESEARCH, CONSULTANTS BUREAU, NEW
YORK, NY, US, vol. 37, no. 1, 26 February 2016
(2016-02-26), pages 69 - 81, XP035840712, ISSN:
1071-2836, [retrieved on 20160226], DOI: 10.1007/
S10946-016-9546-Z
• YINGYING MA ET AL: "Inversion of aerosol size
distribution by using genetic algorithms and
multi-sensor data", 2015 IEEE INTERNATIONAL
GEOSCIENCE AND REMOTE SENSING
SYMPOSIUM (IGARSS), IEEE, 26 July 2015
(2015-07-26), pages 2238 - 2241, XP032806473,
DOI: 10.1109/IGARSS.2015.7326251

EP 4 230 993 B1

**(Cont. next page)**

• **KIM MAN-HAE, YEO HUIDONG, SUGIMOTO NOBUO, LIM HAN-CHEOL, LEE CHUL-KYU, HEO BOK-HAENG, YU YUNG-SUK, SOHN BYUNG-JU, YOON SOON-CHANG,: "Estimation of Particle Mass Concentration from Lidar Measurement", ATMOSPHERE, vol. 25, no. 1, 31 March 2015 (2015-03-31), pages 169 - 177, XP055930060, ISSN: 1598-3560, DOI: 10.14191/ Atmos.2015.25.1.169**

**Description**

**Field of the Invention**

The present invention relates to a method for detecting aerosols using LiDAR(Light Detection and Ranging) technology. In particular, it relates to a method for detecting or analyzing aerosols suspended in the air, based on the mass concentrations of fine and coarse mode particles at different altitudes that are calculated using extinction coefficients as a function of distance for different wavelengths obtained from LiDAR measurements.

**Background of the Invention**

Airborne particulate matters or aerosols, which are an important factor in public health and environmental quality, of smaller sizes, e.g. 2.5 $\mu$m or less are found to be health hazards as they can penetrate into the lungs when people breathe. Those with a size of 1 $\mu$m or less can even enter the bloodstream, causing a greater harm to human health. Additionally, smaller airborne particles tend to absorb and scatter more sunlight while suspended in the air, which increases their impact on climate change.

To brace for the effects of aerosols and to study their impact on climate change, the importance of related technologies that can figure out the spatial distribution of aerosols over time has been growing. So far, LiDAR technology is known to provide the most accurate information for this purpose.

One of the conventional systems for detecting aerosols using LiDAR technology comprises, for example, a transmitter that emits lasers into the air, a receiver that primarily consists of a telescope for collecting signals scattered in the air, a detector that converts/measures the intensity of the collected signals into electrical signals, and a processor that analyzes and processes the final signals. These systems utilize the principle of LiDAR, which involves emitting laser lights of specific wavelengths into the air, where the laser collides with molecules and aerosols present in the air, causing scattering. Among different types of scattering phenomena that occur in the air, some of the laser lights are backscattered towards the direction they came from, namely, a LiDAR observation site, which are then received by the telescope to detect optical signals. By analyzing these optical signals based on their temporal order (e.g. calculating the time it takes for the signals to return after the laser emission), LiDAR allows for monitoring the concentration distribution by distance over time. As a result thereof, it is possible to calculate the distribution of aerosols, yellow dust, haze (smog), volcanic ash and so on at various altitudes.

However, this LiDAR system and technology for detecting aerosols in the prior art has a problem in that they can only detect the distribution of the total mass of aerosols in the air, without necessarily distinguishing the mass concentration according to the size of the aerosols.

Furthermore from the "Journal of Russian Laser Research," Volume 37, Number 1, from January 2016 a paper of Jiandong Mao et al. with the Title "Particle Size distributions based on a multipopulation genetic algorithm used in multiwavelength Lidar" is known. This paper describes the development of a multiwavelength lidar to measure microphysical properties of aerosol particles. It is described to use the optimal aerosol depths at wavelengths of 1064, 532 and 355 nm to determine the particle size distributions using a multipopulation genetic algorithm. Extinction coefficient profiles, the reference height and the reference value were used for the retrieval and the correction factor for geometric overlap was applied.

It is also known from 2015 IEEE International Geoscience and remote sensing symposium, IEEE, from July 26th 2015, pages 2238-2241 a paper of Yingying Ma et al. with the title "Inversion of aerosol size distribution by using genetic algorithms and multi-sensor data". This paper discloses a method to calculate aerosol particle size distribution in aerosols by inverting the parameter size distribution over Wuhan using the characteristics of bimodal distribution of aerosol size and genetic algorithm. These parameters are validated via the inversion method proposed by Dubovik and King.

The KR 102 139 815 B1 describes a method and system for extracting the total amount and size of fine and coarse particulate matter using extinction coefficients from two or more wavelengths. Multiple wavelengths are used to obtain extinction coefficients, which are then applied to equations that define the total amount and size of fine and coarse particles. If fewer than four extinction coefficients are available, additional data such as PM10 and PM2.5 measurements are incorporated.

**Summary of the Invention**

The present invention is directed to provide a method for detecting or analyzing aerosols based on the mass concentrations of fine and coarse mode particles at different altitudes, which are calculated using extinction coefficients as a function of distance for different wavelengths obtained from LiDAR measurements.

In one aspect of an embodiment of the invention, the method for detecting aerosols using LiDAR technology may include: a measurement step, in which laser lights of at least two different wavelengths are emitted from a LiDAR system into the air, and the intensity of backscattered light collected in a receiver of the LiDAR system is measured as a function of distance for different wavelengths; a first calculation step, in which extinction coefficients of aerosols are calculated as a function of distance for different wavelengths, based on the intensity of the backscattered light as a function of distance for different wavelengths of laser light; a second calculation step, in which extinction coefficients of coarse mode particles and extinction coefficients of fine mode particles are calculated as a function of distance for laser light of a particular wavelength, based on the calculated extinction coefficients of aerosols as a function of distance for different wavelengths and using the Ångström exponent of coarse particles and the Ångström exponent of fine particles; and a third calculation step, in which mass concentrations of coarse mode particles and mass concentrations of fine mode particles are calculated as a function of different distances for the laser light of the particular wavelength, based on the calculated extinction coefficients of coarse mode particles and the calculated extinction coefficients of fine mode particles as a function of different distances for the laser light of the particular wavelength.

In one aspect of another embodiment of the invention, the first calculation step in the method for detecting aerosols using LiDAR technology involves calculating extinction coefficients of aerosols as a function of distance for different wavelengths, using Equation below:

$$P(z) = \frac{EC}{z^2}\, \beta(z)\, T(z)$$

where, P(z) represents the intensity of backscattered laser light as a function of distance; z represents a distance; E represents the initial intensity of the originally emitted laser light; C represents a device constant; $\beta(z)$ represents the backscattering coefficient; and T(z) represents the extinction coefficient.

In one aspect of another embodiment of the invention, the second calculation step in the method for detecting aerosols using LiDAR technology involves calculating extinction coefficients of coarse mode particles and extinction coefficients of fine mode particles as a function of distance at a given wavelength of laser light, using Equation below:

$$A = -\frac{\ln\left(T(z)_{aer,\lambda_1}\big/ T(z)_{aer,\lambda_2}\right)}{\ln\left(\lambda_1/\lambda_2\right)}$$

$$F_{\lambda_1} = \frac{\left(0.87 - e^{-0.7A}\right)}{0.62}\, T(z)_{aer,\lambda_1}$$

$$C_{\lambda_1} = \frac{\left(e^{-0.7A} - 0.25\right)}{0.63}\, T(z)_{aer,\lambda_1}$$

where, A represents the Ångström exponent; $T(z)_{aer,\lambda_1}$ represents the extinction coefficient of aerosols, calculated at a distance z for the first wavelength $\lambda_1$; $T(z)_{aer,\lambda_2}$, represents the extinction coefficient of aerosols, calculated at a distance z for the second wavelength $\lambda_2$; $F_{\lambda_1}$ represents the extinction coefficient of fine mode particles, calculated for the first wavelength $\lambda_1$; and $C_{\lambda_1}$ represents the extinction coefficient of coarse mode particles, calculated for the first wavelength $\lambda_1$.

In one aspect of another embodiment of the invention, the third calculation step in the method for detecting aerosols using LiDAR technology involves calculating mass concentrations of coarse and fine mode particles as a function of distance at a given wavelength of laser light, using Equation below:

$$PM_{Course} = C_{\lambda_1} Q^{-1}, \quad PM_{Fine} = F_{\lambda_1} Q^{-1},$$

where, $PM_{Coarse}$ represents the mass concentration of coarse mode particles; $PM_{Fine}$ represents the mass concentration of fine mode particles; $F_{\lambda_1}$ represents the extinction coefficient of fine mode particles, calculated for the first wavelength $\lambda_1$; $C_{\lambda_1}$ represents the extinction coefficient of coarse mode particles, calculated for the first wavelength $\lambda_1$; and Q represents the mass extinction efficiency of aerosols.

The present invention method allows for detecting the total mass distribution as well as spatial distribution of aerosols according to their size.

## Brief Description of the Drawings

Various objects, features and attendant advantages of the present invention will become fully appreciated when considered in conjunction with the accompanying drawings, wherein:

Figure 1 schematically illustrates the operating principle of a conventional LiDAR system for observation, where the LiDAR system primarily uses lasers in the visible and near-infrared regions to observe the atmospheric vertical structures.

Figure 2 graphically illustrates changes in the total mass concentration of aerosols, mass concentration of coarse mode particles and mass concentration of fine mode particles at different measurement distances (heights), respectively.

Figure 3 briefly describes each stop of the present invention method for detecting or analyzing aerosols.

## Detailed Description of the Preferred Embodiments

A method for detecting or analyzing aerosols including fine and coarse mode particles according to the present invention will now be described in more detail, with reference to the appended drawings.

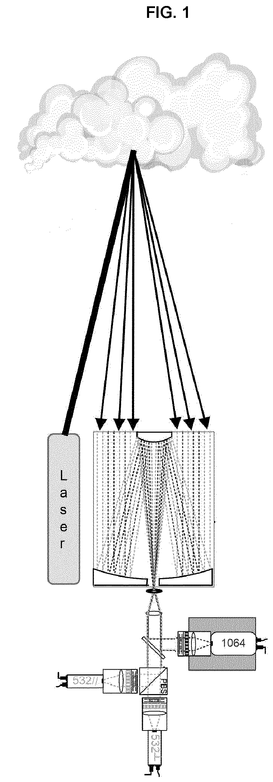

Figure 1 schematically illustrates the operating principle of a conventional LiDAR system for observation, where the LiDAR system primarily uses lasers in the visible and near-infrared regions to observe the atmospheric vertical structures. First, a transmitter generates laser lights and emits them into the air. The emitted laser lights are then scattered by aerosols, clouds, air molecules, and so on in the air, some of which are backscattered and enter a receiver (telescope) of a LiDAR system. A detector measures the intensity of the backscattered lights collected in the telescope and the time it takes for the laser lights to travel back towards the system after the initial emission, such that a distance to the aerosols, clouds or air molecules can be obtained. Here, a polarization beam splitter may be used to obtain separate measurements of light having components parallel to the originally emitted laser light and light having components perpendicular to the originally emitted laser light. Referring to Figure 1, observations are performed at two wavelengths, 1064 nm and 532 nm, for example, and the parallel and perpendicular components at the 532 nm wavelength are separately observed.

Among others, the information that can be obtained by LiDAR observation for use in detection or analysis of aerosols typically include extinction coefficients and depolarization ratios, for example. As will be described below, the present invention concerns a method for detecting or analyzing aerosols suspended in the air, based on the mass concentrations of fine and coarse mode particles that are calculated using extinction coefficients of the aerosols as a function of distance for different wavelengths.

In one aspect of an embodiment of the invention, the method for detecting aerosols using LiDAR technology may include: a measurement step, in which laser lights of at least two different wavelengths are emitted from a LiDAR system into the air, and the intensity of backscattered light collected in a receiver of the LiDAR system is measured as a function of distance for different wavelengths; a first calculation step, in which extinction coefficients of aerosols are calculated as a function of distance for different wavelengths, based on the intensity of the backscattered light as a function of distance for different wavelengths of laser light; a second calculation step, in which extinction coefficients of coarse mode particles and extinction coefficients of fine mode particles are calculated as a function of distance for laser light of a particular wavelength, based on the calculated extinction coefficients of aerosols as a function of distance for different wavelengths; and a third calculation step, in which mass concentrations of coarse mode particles and mass concentrations of fine mode particles are calculated as a function of different distances for the laser light of the particular wavelength, based on the calculated extinction coefficients of coarse mode particles and the calculated extinction coefficients of fine mode particles as a function of different distances for the laser light of the particular wavelength.

The following will now elaborate each step of the method.

From the LiDAR measurements, one can determine the optical properties of aerosols distributed in the air, which can be given in a quantitative expression, using those values of the extinction coefficients of aerosols, for example.

Generally, the attenuation of light passing through a medium can be expressed by the following simple equation based on Beer-Lambert's law:

$$\frac{dI_\lambda}{I_\lambda} = -\sigma_\lambda(z)dz \qquad (1)$$

where, $I$ represents the intensity of light, $\sigma$ represents the extinction coefficient of a medium, $\lambda$ represents the wavelength of light, and z represents a distance. Here, the medium may be aerosols, air and so on. Integrating Equation (1) from $z = 0$ (before the light passes through the medium) to $z = Z$ (after the light passes through the medium) gives the intensity of the light after it passed through the medium as shown below:

$$I_\lambda(z) = I_\lambda(0)\exp\left[-\int_0^Z \sigma_\lambda(z)dz\right]$$ (2).

In other words, once the extinction coefficient of the medium is obtained, the degree to which the intensity of light is attenuated by the medium can be determined by Equation (2). This allows to quantify the intensity of light if the medium is aerosols.

When Equation (2) is applied to LiDAR measurements, the following LiDAR Equation can be obtained:

$$P(z) = \frac{EC}{z^2}\beta(z)\,T(z)$$ (3)

where $P(z)$ is a measurement obtained by the LiDAR system and represents the intensity of laser light that has been returned or backscattered by aerosols at a distance $z$, after its initial emission from the system; $E$ represents the initial intensity of the originally emitted laser light; and $C$ represents a device constant.

Therefore, the aforementioned measurement step of the method for detecting aerosols using LiDAR technology according to one aspect of one embodiment of the invention is comprised of determining $P(z)$ as in Equation (3).

Referring back to Equation (3), $\beta(z)$ represents the backscattering coefficient, which indicates a ratio of backscattered light to incident lights into the air and has units of $m^{-1}sr^{-1}$; and T(z) represents the extinction coefficient of atmospheric constituents and has units of $m^{-1}$. Since the backscattering coefficient $\beta(z)$ and the extinction coefficient $T(z)$ may be affected by both air molecules (denoted by the subscript, "$_{mol}$") and aerosols (denoted by the subscript, "$_{aer}$"), they can be expressed as the sum of these contributions as follows: $\beta(z)=\beta_{mol}(z)+\beta_{aer}(z)$ and $T(z)=T_{mol}(z)+T_{aer}(z)$, respectively. With the air molecules not making much of a difference in the backscattering coefficient and dissipation coefficient, however, they can be treated as constants. Thus, the backscattering and extinction coefficients due to aerosols can be simplified as functions of the concentration of aerosols.

Accordingly, by plugging the intensity of backscattered light $P(z)$ as a function of distance for different wavelengths, which is obtained in the measurement step, into Equation (3) and utilizing Klett's method (1981, 1985), the extinction coefficients of aerosols as a function of distance z for different wavelengths, $T_{aer}(z)$, can be obtained.

Therefore, the aforementioned first calculation step of the method for detecting aerosols using LiDAR technology according to one aspect of one embodiment of the invention is comprised of calculating extinction coefficients of aerosols as a function of distance z for different wavelengths, $T_{aer}(z)$, using $P(z)$ obtained in the previous step.

As disclosed in Korean Patent No. 10-1012279 (Registration date: 26 January 2011), which is listed as prior art herein, the above Equation (3) has more variables than what is known, making it difficult to solve mathematically. Hence, some assumptions are usually made before analyzing, and Fernald's and Klett's method is the most commonly used method for solving the LiDAR equation.

Klett's method presents a more reliable and stable way to solve the LiDAR equation when the atmospheric turbidity is high, i.e., when the concentration of aerosols is very high. For convenience, if the effects of aerosols and the effects of air molecules are taken into consideration together, Equation (3) can be rearranged as follows:

$$P(r) = P_0 \frac{c\tau}{2} A \frac{\beta(r)}{r^2} exp\left(-2\int_0^r \sigma(r')dr'\right)$$ (3-1)

where $P(r)$ represents the measured signal, $P_o$ represents the power, c represetns the speed of light, $_\tau$ represents the pulse duration, A represents the effective system receiver area, $r^{(=c(t-t_0)/2)}$ represents the distance, and $\beta$ and $\sigma$ represent, respectively, the backscattering and extinction coefficients of the atmosphere taken both air molecules and aerosols into consideration together. By defining a new variable S as shown in Equation (3-2) below, followed by plugging it into Equation (3-1) and rearranging, a differential equation as shown in Equation (3-3) can be obtained:

$$S(r) \equiv \ln\left[r^2 P(r)\right]$$ (3-2)

$$\frac{dS}{dr} = \frac{1}{\beta}\frac{d\beta}{dr} - 2\sigma$$ (3-3).

In particular, Equation (3-3) is known as Bernoulli equation, and its solution is given by Equation (3-4):

$$\sigma(r) = \frac{\exp\left[(S - S_0)/\kappa\right]}{\sigma_0^{-1} - \frac{2}{\kappa}\int_{r_0}^{r}\exp\left[(S - S_0)/\kappa\right]dr'}$$ (3-4).

However, when numerically solving Equation (3-4), the reference point (singular altitude) is set to a value near the ground such that the problem in the Fernald's method cannot be solved. To solve this problem, Klett modified the above Equation (3-4) as follows:

$$\sigma(r) = \frac{\exp\left[(S - S_m)/\kappa\right]}{\sigma_{m0}^{-1} - \frac{2}{\kappa}\int_{r}^{r_m}\exp\left[(S - S_m)/\kappa\right]dr'}$$ (3-5)

Klett made a change such that the singular altitude is set to a point in the upper atmosphere from the near ground where there are many factors of change. In particular, because Equation (3-5) calculates the extinction coefficient at each altitude as an integral value from the singular altitude, even if there is an error at a certain altitude, the error would not spread significantly in the vertical direction, but any variation or change in the distribution of aerosols by altitude can be analyzed rather gradually.

Further, the extinction coefficients of aerosols $T_{aer}$ can be expressed as the sum of extinction coefficients of coarse mode particles (C) and extinction coefficients of fine mode particles (F) as shown in Equation (4) below. Here, the coarse mode particles and the fine mode particles are distinguished by their particle size. For example, particles having the diameter of approximately 2.5 μm or larger are classified into coarse mode particles, while particles having the diameter of less than 2.5 μm are classified into fine mode particles.

$$T_{aer} = C + F \quad (4)$$

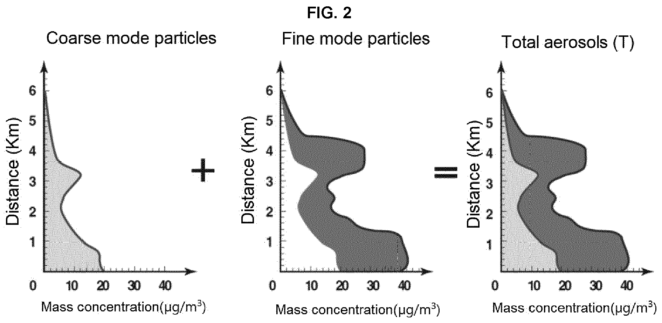

Figure 2 graphically illustrates changes in the total mass concentration of aerosols, mass concentration of coarse mode particles and mass concentration of fine mode particles at different measurement distances (heights), respectively.

The aforementioned second calculation step of the method for detecting aerosols using LiDAR technology according to one aspect of one embodiment of the invention is comprised of calculating C and F as in Equation (4), using the given $T_{aer}$

To elaborate the second calculation step, expressing the extinction coefficient of aerosols $T_{aer}$ as a sum of extinction coefficients of coarse mode particles C and extinction coefficients of fine mode particles F is based on the scattering characteristics that vary depending on the particle size. As such, laser lights of at least two wavelengths should be used.

In one aspect of the invention, the LiDAR system is comprised of an Nd-YAG laser, which utilizes laser lights of 1064 nm and 532 nm wavelengths for measurements. In this case, Equation 4 can be expressed as Equation (5) below:

$$T_{aer,532} = C_{532} + F_{532}, \quad T_{aer,1064} = C_{1064} + F_{1064} \quad (5).$$

The relationship between extinction coefficients of aerosols and wavelengths of laser lights used can be described using the Ångström exponent, å, which is expressed as Equation (6) below:

$$\dot{a} \cong - \frac{\ln(T_{\lambda_1}/T_{\lambda_2})}{\ln(\lambda_1/\lambda_2)} \quad (6)$$

The Ångström exponent of coarse mode particles has a small value of 0.2, while that for fine mode particles has a much larger value of 2. Accordingly, Equation (6) can be rewritten as Equations (7) and (8) below:

$$0.2 \cong - \frac{\ln(C_{532}/C_{1064})}{\ln(532/1064)}, \quad C_{532} \cong 1.15\, C_{1064} \quad (7)$$

$$2 \cong - \frac{\ln(F_{532}/F_{1064})}{\ln(532/1064)}, \quad F_{532} \cong 4\, F_{1064} \quad (8).$$

The Ångström exponent of aerosols can also be rewritten in terms of $T_{aer}$ value at a given wavelength (e.g. 532 nm) from LiDAR measurements as Equation (9) below:

$$A \cong - \frac{\ln(T_{aer,532}/T_{aer,1064})}{\ln(532/1064)}, \quad T_{aer,532} \cong e^{0.7A}\, T_{aer,1064} \quad (9).$$

Similarly, the Ångström exponent for aerosols can be rewritten in terms of $T_{aer}$ value at 1064 nm from LiDAR measurements as Equation (10) below:

$$T_{1064} = C_{1064} + F_{1064} \quad (10).$$

Plugging Equations (7), (8) and (9) into Equation (10) gives the following:

$$\frac{1}{1.15} C_{532} + \frac{1}{4} F_{532} = e^{-0.7A}\, T_{aer,532} \quad (11).$$

Using the extinction coefficients of aerosols at a wavelength of 532 nm of laser light in this manner, the relationship between coarse mode particles and fine mode particles can be expressed as follows:

$$\frac{1}{1.15} C_{532} + \frac{1}{4} F_{532} = e^{-0.7A}(C_{532} + F_{532})$$

$$(0.87 - e^{-0.7A}) C_{532} = (e^{-0.7A} - 0.25) F_{532}$$

$$\therefore \; C_{532} = \frac{(e^{-0.7A} - 0.25)}{(0.87 - e^{-0.7A})} F_{532} \qquad (12).$$

By rearranging the above, it is possible to obtain the relationships among extinction coefficients of aerosols, coarse mode particles and fine mode particles.

First, the relationship between extinction coefficients of aerosols and fine mode particles can be expressed as follows:

$$C_{532} + F_{532} = T_{aer,532}$$

$$\frac{(e^{-0.7A} - 0.25)}{(0.87 - e^{-0.7A})} F_{532} + F_{532} = T_{aer,532}$$

$$\therefore \; F_{532} = \frac{(0.87 - e^{-0.7A})}{0.62} T_{aer,532} \qquad (13).$$

Next, the relationship between extinction coefficients of aerosols and coarse mode particles can be expressed as follows:

$$C_{532} + \frac{(0.88 - e^{-0.7A})}{(e^{-0.7A} - 0.25)} C_{532} = T_{aer,532}$$

$$\frac{0.63}{(e^{-0.7A} - 0.25)} C_{532} = T_{aer,532}$$

$$\therefore \; C_{532} = \frac{(e^{-0.7A} - 0.25)}{0.63} T_{aer,532} \qquad (14).$$

To summarize, using the intensity P of backscattered lights as a function of distance at wavelengths 1064 nm and 532 nm obtained in Equation (3), the extinction coefficients of aerosols $T_{aer}$ at wavelengths 1064 nm and 532 nm are calculated. Each calculated $T_{aer}$ value at respective wavelengths is then used to obtain the Ångström exponent $A$ of aerosols, applying Equation (9). Finally, this A value, along with the $T_{aer}$ are then used to calculate extinction coefficients of the fine and coarse mode particles, at a given wavelength of 532 nm, for example, respectively, i.e., $F_{532}$ and $C_{532}$.

Additionally, by applying the mass extinction efficiency ($Q$, m$^2$/g) of aerosols to each of the calculated extinction coefficients of the fine and coarse mode particles as shown in Equation (15), mass concentrations of the fine and coarse mode particles, i.e., $PM_{Fne}$ and $PM_{Coarse}$, which make up the total mass concentration of aerosols:

$$PM_{Coarse} = C_{532}Q^{-1}, \; PM_{Fine} = F_{532}Q^{-1} \; (g/m^3) \quad (15).$$

Here, the mass extinction efficiency of aerosol can be presented as a constant value under different conditions.

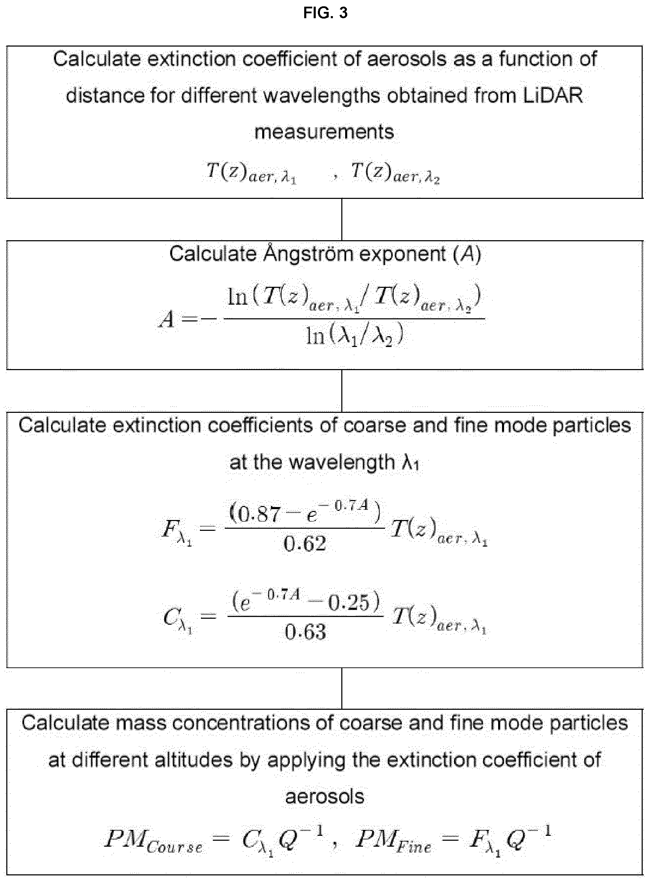

Figure 3 briefly describes each stop of the present invention method for detecting or analyzing aerosols.

As shown in Figure 3, the method for detecting or analyzing aerosols according to the present invention involves a series of calculations. First, extinction coefficients of aerosols as a function of distance for different wavelengths are calculated from LiDAR measurements. Based on the results, the Ångström exponent of aerosols is then calculated. Next, extinction coefficients of coarse and fine mode particles at a given wavelength are calculated, and finally, mass concentrations of coarse and fine mode particles as a function of distance, based on the extinction coefficients of aerosols obtained. These altogether describe the spatial distribution of aerosols according to the size of the particles.

It will be appreciated that variations to the embodiments of the invention can be made while still falling within the scope of the invention. Alternative features serving the same, equivalent or similar purpose can replace features disclosed in the specification, unless stated otherwise. Thus, unless stated otherwise, each feature disclosed represents one example of a generic series of equivalent or similar features.

The present invention also covers the exact terms, features, values and ranges, etc. in case these terms, features, values and ranges etc. are used in conjunction with terms such as about, around, generally, substantially, essentially, at least etc. (i.e., "about 3" shall also cover exactly 3 or "substantially constant" shall also cover exactly constant).

Use of exemplary language, such as "for instance", "such as", "for example" ("e.g.,") and the like, is merely intended to better illustrate the invention and does not indicate a limitation on the scope of the invention unless specifically so claimed.

While the invention has been described in connection with what is presently considered to be the most practical and preferred embodiments, it is to be understood that the invention is not to be limited to the disclosed embodiment, but on the contrary, is intended to cover various modifications and equivalent arrangements included within the scope of the appended claims.

**Claims**

1. A method for detecting aerosols using LiDAR technology, comprising:

   a measurement step, in which laser lights of at least two different wavelengths are emitted from a LiDAR system into the air, and the intensity of backscattered light collected in a receiver of the LiDAR system is measured as a function of distance for different wavelengths;
   a first calculation step, in which extinction coefficients of aerosols are calculated as a function of distance for different wavelengths, based on the intensity of the backscattered light as a function of distance for different wavelengths of laser light;
   **characterized by**
   a second calculation step, in which extinction coefficients of coarse mode particles and extinction coefficients of fine mode particles are calculated as a function of distance for laser light of a particular wavelength, based on the calculated extinction coefficients of aerosols as a function of distance for different wavelengths and using the Ångström exponent of coarse particles and the Ångström exponent of fine particles; and
   a third calculation step, in which mass concentrations of coarse mode particles and mass concentrations of fine mode particles are calculated as a function of different distances for the laser light of the particular wavelength, based on the calculated extinction coefficients of coarse mode particles and the calculated extinction coefficients of fine mode particles as a function of different distances for the laser light of the particular wavelength.

2. The method for detecting aerosols using LiDAR technology of claim 1, **characterized in that** the first calculation step involves calculating extinction coefficients of aerosols as a function of distance for different wavelengths, using Equation below:

$$P(z) = \frac{EC}{z^2} \beta(z)\, T(z)$$

where, $P(z)$ represents the intensity of backscattered laser light as a function of distance; $z$ represents a distance; $E$ represents the initial intensity of the originally emitted laser light; $C$ represents a device constant; $\beta(z)$ represents the backscattering coefficient; and $T(z)$ represents the extinction coefficient.

3. The method for detecting aerosols using LiDAR technology of claim 1, **characterized in that** the second calculation step involves calculating extinction coefficients of coarse mode particles and extinction coefficients of fine mode particles as a function of distance at a given wavelength of laser light, using Equation below:

$$A = -\frac{\ln\left(T(z)_{aer,\lambda_1} / T(z)_{aer,\lambda_2}\right)}{\ln(\lambda_1/\lambda_2)}$$

$$F_{\lambda_1} = \frac{(0.87 - e^{-0.7A})}{0.62} \, T(z)_{aer,\lambda_1}$$

$$C_{\lambda_1} = \frac{(e^{-0.7A} - 0.25)}{0.63} \, T(z)_{aer,\lambda_1}$$

where,

$A$ represents the Ångström exponent;

$T(z)_{aer,\lambda_1}$ represents the extinction coefficient of aerosols, calculated at a distance z for the first wavelength $\lambda_1$;

$T(z)_{aer,\lambda_2}$, represents the extinction coefficient of aerosols, calculated at a distance z for the second wavelength $\lambda_2$;

$F_{\lambda_1}$ represents the extinction coefficient of fine mode particles, calculated for the first wavelength $\lambda_1$; and

$C_{\lambda_1}$ represents the extinction coefficient of coarse mode particles, calculated for the first wavelength $\lambda_1$.

4. The method for detecting aerosols using LiDAR technology of claim 1, **characterized in that** the third calculation step involves calculating mass concentrations of coarse and fine mode particles as a function of distance at a given wavelength of laser light, using Equation below:

$$PM_{Course} = C_{\lambda_1} Q^{-1}, \quad PM_{Fine} = F_{\lambda_1} Q^{-1},$$

where,

$PM_{Coarse}$ represents the mass concentration of coarse mode particles;

$PM_{Fine}$ represents the mass concentration of fine mode particles;

$F_{\lambda_1}$ represents the extinction coefficient of fine mode particles, calculated for the first wavelength $\lambda_1$;

$C_{\lambda_1}$ represents the extinction coefficient of coarse mode particles, calculated for the first wavelength $\lambda_1$; and

$Q$ represents the mass extinction efficiency of aerosols.

**Patentansprüche**

1. Verfahren zum Nachweisen von Aerosolen unter Verwendung von LiDAR-Technologie, umfassend:

einen Messschritt, in dem Laserlicht mindestens zweier verschiedener Wellenlängen von einem LiDAR-System in die Luft emittiert wird und die Intensität des in einem Empfänger des LiDAR-Systems gesammelten rückgestreuten Lichts als Funktion der Entfernung für verschiedene Wellenlängen gemessen wird;

einen ersten Berechnungsschritt, bei dem Extinktionskoeffizienten von Aerosolen als Funktion der Entfernung für verschiedene Wellenlängen berechnet werden, basierend auf der Intensität des rückgestreuten Lichts als Funktion der Entfernung für verschiedene Wellenlängen des Laserlichts;

**gekennzeichnet durch**

einem zweiten Berechnungsschritt, in dem Extinktionskoeffizienten von grobmodigen Partikeln und Extinktionskoeffizienten von feinmodigen Partikeln als Funktion der Entfernung für Laserlicht einer bestimmten Wellenlänge berechnet werden, basierend auf den berechneten Extinktionskoeffizienten von Aerosolen als Funktion der Entfernung für verschiedene Wellenlängen und unter Verwendung des Angström-Exponenten von groben Partikeln und des Angström-Exponenten von feinen Partikeln; und

einem dritten Berechnungsschritt, in dem Massenkonzentrationen von grobmodigen Partikeln und Massenkonzentrationen von feinmodigen Partikeln als Funktion verschiedener Entfernungen für das Laserlicht der bestimmten Wellenlänge berechnet werden, basierend auf den berechneten Extinktionskoeffizienten von grobmodigen Partikeln und den berechneten Extinktionskoeffizienten von feinmodigen Partikeln als Funktion verschiedener Entfernungen für das Laserlicht der bestimmten Wellenlänge.

2. Verfahren zum Nachweisen von Aerosolen unter Verwendung von LiDAR-Technologie nach Anspruch 1, **dadurch gekennzeichnet, dass** der erste Berechnungsschritt die Berechnung der Extinktionskoeffizienten von Aerosolen als Funktion der Entfernung für verschiedene Wellenlängen unter Verwendung der folgenden Gleichung umfasst:

$$P(z) = \frac{EC}{z^2}\,\beta(z)\,T(z)$$

wobei *P(z)* die Intensität des rückgestreuten Laserlichts als Funktion der Entfernung darstellt; *z* eine Entfernung darstellt; *E* die Anfangsintensität des ursprünglich emittierten Laserlichts darstellt; *C* eine Gerätekonstante darstellt; $\beta$ *(z)* den Rückstreukoeffizienten darstellt; und *T(z)* den Extinktionskoeffizienten darstellt.

3. Verfahren zum Nachweisen von Aerosolen unter Verwendung von LiDAR-Technologie nach Anspruch 1, **dadurch gekennzeichnet, dass** der zweite Berechnungsschritt das Berechnen von Extinktionskoeffizienten von grobmodigen Partikeln und Extinktionskoeffizienten von feinmodigen Partikeln als Funktion der Entfernung bei einer gegebenen Wellenlänge des Laserlichts unter Verwendung der folgenden Gleichung umfasst:

$$A = -\,\frac{\ln\left(T(z)_{aer,\lambda_1} / T(z)_{aer,\lambda_2}\right)}{\ln\left(\lambda_1/\lambda_2\right)}$$

$$F_{\lambda_1} = \frac{\left(0.87 - e^{-0.7A}\right)}{0.62}\,T(z)_{aer,\lambda_1}$$

$$C_{\lambda_1} = \frac{\left(e^{-0.7A} - 0.25\right)}{0.63}\,T(z)_{aer,\lambda_1}$$

wobei

A den Angström-Exponenten darstellt;
$T(z)_{aer,\lambda_1}$ den Extinktionskoeffizienten von Aerosolen darstellt, berechnet bei einer Entfernung z für die erste Wellenlänge $\lambda_1$;
$T(z)_{aer,\lambda_2}$ den Extinktionskoeffizienten von Aerosolen darstellt, berechnet bei einer Entfernung z für die zweite Wellenlänge $\lambda_2$;
$F_{\lambda_1}$ den Extinktionskoeffizienten von feinmodigen Partikeln darstellt, berechnet für die erste Wellenlänge $\lambda_1$; und
$C_{\lambda_1}$ den Extinktionskoeffizienten von grobmodigen Partikeln darstellt, berechnet für die erste Wellenlänge $\lambda_1$.

4. Verfahren zum Nachweisen von Aerosolen unter Verwendung von LiDAR-Technologie nach Anspruch 1, **dadurch gekennzeichnet, dass** der dritte Berechnungsschritt die Berechnung der Massenkonzentrationen von grob- und feinmodigen Partikeln als Funktion der Entfernung bei einer gegebenen Wellenlänge des Laserlichts unter Verwendung der folgenden Gleichung umfasst:

$$PM_{Course} = C_{\lambda_1}Q^{-1}, \quad PM_{Fine} = F_{\lambda_1}Q^{-1},$$

wobei

$PM_{Coarse}$ die Massenkonzentration von grobmodigen Partikeln darstellt;
$PM_{Fine}$ die Massenkonzentration von feinmodigen Partikeln darstellt;
$F_{\lambda_1}$ den Extinktionskoeffizienten von feinmodigen Partikeln darstellt, berechnet für die erste Wellenlänge $\lambda_1$;
$C_{\lambda_1}$ den Extinktionskoeffizienten von grobmodigen Partikeln darstellt, berechnet für die erste Wellenlänge $\lambda_1$; und
Q die Massenauslöschungseffizienz von Aerosolen darstellt.

**Revendications**

1. Méthode de détection des aérosols à l'aide de la technologie LiDAR :

une étape de mesure, au cours de laquelle des lumières laser d'au moins deux longueurs d'onde différentes sont émises dans l'air par un système LiDAR, et l'intensité de la lumière rétrodiffusée collectée dans un récepteur du système LiDAR est mesurée en fonction de la distance pour différentes longueurs d'onde ; une première étape de calcul, au cours de laquelle les coefficients d'extinction des aérosols sont calculés en fonction de la distance pour différentes longueurs d'onde, sur la base de l'intensité de la lumière rétrodiffusée en fonction de la distance pour différentes longueurs d'onde de la lumière laser ;

**caractérisée par**

une deuxième étape de calcul, au cours de laquelle les coefficients d'extinction des particules de mode grossier et les coefficients d'extinction des particules de mode fin sont calculés en fonction de la distance pour une lumière laser d'une longueur d'onde particulière, sur la base des coefficients d'extinction calculés des aérosols en fonction de la distance pour différentes longueurs d'onde et en utilisant l'exposant d'Ångström des particules grossières et l'exposant d'Ångström des particules fines ; et

une troisième étape de calcul, au cours de laquelle les concentrations massiques de particules en mode grossier et les concentrations massiques de particules en mode fin sont calculées en fonction de différentes distances pour la lumière laser d'une longueur d'onde donnée, sur la base des coefficients d'extinction calculés des particules en mode grossier et des coefficients d'extinction calculés des particules en mode fin en fonction de différentes distances pour la lumière laser d'une longueur d'onde donnée.

2. Méthode de détection des aérosols par la technologie LiDAR de la revendication 1, **caractérisée par le fait que** la première étape de calcul consiste à calculer les coefficients d'extinction des aérosols en fonction de la distance pour différentes longueurs d'onde, à l'aide de l'équation ci-dessous :

$$P(z) = \frac{EC}{z^2}\, \beta(z)\, T(z)$$

où, $P(z)$ représente l'intensité de la lumière laser rétrodiffusée en fonction de la distance ; $z$ représente une distance ; $E$ représente l'intensité initiale de la lumière laser émise à l'origine ; $C$ représente une constante de l'appareil ; $\beta(z)$ représente le coefficient de rétrodiffusion ; et $T(z)$ représente le coefficient d'extinction.

3. Méthode de détection des aérosols par la technologie LiDAR de la revendication 1, **caractérisée par le fait que** la deuxième étape de calcul consiste à calculer les coefficients d'extinction des particules en mode grossier et les coefficients d'extinction des particules en mode fin en fonction de la distance à une longueur d'onde donnée de la lumière laser, à l'aide de l'équation ci-dessous :

$$A = -\frac{\ln\left(T(z)_{aer,\lambda_1} / T(z)_{aer,\lambda_2}\right)}{\ln(\lambda_1/\lambda_2)}$$

$$F_{\lambda_1} = \frac{(0.87 - e^{-0.7A})}{0.62}\, T(z)_{aer,\lambda_1}$$

$$C_{\lambda_1} = \frac{(e^{-0.7A} - 0.25)}{0.63}\, T(z)_{aer,\lambda_1}$$

où,

A représente l'exposant d'Ångström ;

$T(z)_{aer,\lambda_1}$ représente le coefficient d'extinction des aérosols, calculé à une distance $z$ pour la première longueur d'onde $\lambda_1$;

$T(z)_{aer,\lambda_2}$ représente le coefficient d'extinction des aérosols, calculé à une distance $z$ pour la deuxième longueur d'onde $\lambda_2$;

$F_{\lambda_1}$ représente le coefficient d'extinction des particules en mode fin, calculé pour la première longueur d'onde $\lambda_1$; et

$C_{\lambda_1}$ représente le coefficient d'extinction des particules du mode grossier, calculé pour la première longueur d'onde $\lambda_1$.

4. Méthode de détection d'aérosols par la technologie LiDAR de la revendication 1, **caractérisée par le fait que** la troisième étape de calcul consiste à calculer les concentrations en masse des particules en mode grossier et en mode fin en fonction de la distance à une longueur d'onde donnée de la lumière laser, à l'aide de l'équation ci-dessous :

$$PM_{Course} = C_{\lambda_1}\, Q^{-1},\ \ PM_{Fine} = F_{\lambda_1}\, Q^{-1},$$

où,

$PM_{Course}$ représente la concentration en masse des particules du mode grossier ;
$PM_{Fine}$ représente la concentration en masse des particules en mode fin ;
$F_{\lambda_1}$ représente le coefficient d'extinction des particules en mode fin, calculé pour la première longueur d'onde $\lambda_1$ ;
$C_{\lambda_1}$ représente le coefficient d'extinction des particules du mode grossier, calculé pour la première longueur d'onde $\lambda_1$ ; et
$Q$ représente l'efficacité d'extinction de masse des aérosols.

FIG. 1

FIG. 2

Coarse mode particles

Fine mode particles

Total aerosols (T)

**FIG. 3**

Calculate extinction coefficient of aerosols as a function of distance for different wavelengths obtained from LiDAR measurements

$$T(z)_{aer, \lambda_1} \quad , \quad T(z)_{aer, \lambda_2}$$

---

Calculate Ångström exponent ($A$)

$$A = - \frac{\ln\left(T(z)_{aer, \lambda_1} / T(z)_{aer, \lambda_2}\right)}{\ln\left(\lambda_1 / \lambda_2\right)}$$

---

Calculate extinction coefficients of coarse and fine mode particles at the wavelength $\lambda_1$

$$F_{\lambda_1} = \frac{\left(0.87 - e^{-0.7A}\right)}{0.62} T(z)_{aer, \lambda_1}$$

$$C_{\lambda_1} = \frac{\left(e^{-0.7A} - 0.25\right)}{0.63} T(z)_{aer, \lambda_1}$$

---

Calculate mass concentrations of coarse and fine mode particles at different altitudes by applying the extinction coefficient of aerosols

$$PM_{Course} = C_{\lambda_1} Q^{-1} \quad , \quad PM_{Fine} = F_{\lambda_1} Q^{-1}$$

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- KR 102139815 B1

- KR 101012279

**Non-patent literature cited in the description**

- **JIANDONG MAO et al.** Particle Size distributions based on a multipopulation genetic algorithm used in multiwavelength Lidar. *Journal of Russian Laser Research*, January 2016, vol. 37 (1)

- Inversion of aerosol size distribution by using genetic algorithms and multi-sensor data. **YINGYING MA et al.** 2015 IEEE International Geoscience and remote sensing symposium. IEEE, 26 July 2015, 2238-2241